# EUROPÄISCHE PATENTSCHRIFT

(11) **EP 0 451 349 B1**
(45) Veröffentlichungstag und Bekanntmachung des Hinweises auf die Patenterteilung: **17.05.1995**
(21) Anmeldenummer: 90123516.8
(22) Anmeldetag: 07.12.1990
(51) Int. Cl.: B30B 11/24, B30B 9/30

(54) **Schneckenpresse**
Screw press
Presse à vis

(30) Priorität: 06.04.1990 DE 4011248
(43) Veröffentlichungstag der Anmeldung: 16.10.1991
(73) Patentinhaber: Alois Pöttinger Maschinenfabrik GmbH, A-4710 Grieskirchen (AT)
(72) Erfinder: Groisböck, Franz, A-4710 St. Georgen 44 (AT); Frauscher, Josef, A-4942 Gurten 50 (AT); Leposa, Wolfgang, A-4710 Grieskirchen (AT)
(74) Vertreter: Dupal, Helmut, Dipl-Ing.

(56) Entgegenhaltungen:
- CA-A- 910 712
- DE-A- 2 717 337
- FR-A- 2 156 743
- GB-A- 229 769
- US-A- 3 956 981
- US-A- 4 408 888
- PATENT ABSTRACTS OF JAPAN vol. 6, no. 210 (M-166)(1088) 22. Januar 1982 & JP-A-57 116 000 (ORION KOORU K.K. )
- PLASTVERARBEITER Bd. 39, Nr. 1, Januar 1988, SPEYER, W. GERMANY Seiten 92 - 96; A. FORNEFELD: 'AUSLEGUNGSKRITERIEN BEI DER GRANULATVERARBEITUNG '

## Beschreibung

Die Erfindung betrifft eine Schneckenpresse entsprechend dem Gattungsbegriff des Anspruches 1.

Maschinen dieser Art sind einfach aufgebaut, aber sehr empfindlich in Bezug auf die Zusammensetzung des Preßgutes und neigen zu starkem Verschleiß, besonders des Mundstückes oder dessen Einsatzes und des Preßteiles der Preßschnecke.

Bei einer bisherigen Ausführungsform der Anmelderin wie sie in der DE-OS 37 43 504.4 wiedergegeben ist, ist ein Abstreifrad vorgesehen, das zwischen die Gänge der Schneckenwindung des Preßteiles hineingreift und dort mitläuft oder auch synchron angetrieben wird, um seinen Verschleiß zu mindern.

Durch die Anwendung des Abstreifrades ist die Förderung des Preßgutes über einen weiten Bereich der Zusammensetzung des Preßgutes sichergestellt und es treten kaum Verstopfungsschwierigkeiten bei Stillstand und neuerlichem Anlauf der Maschine auf.

Auch die Menge der Wasserzugabe ist bei Verwendung eines Abstreifrades wenig kritisch. Allerdings ist die Anordnung mit Abstreifrad besonders empfindlich gegen Fremdkörper die unter Umständen die Zerstörung des Abstreifrades selbst, aber auch des Preßteiles der Preßschnecke hervorrufen können.

Bei Schneckenpressen ohne Abstreifrad kommt es vor allem auf das Zusammenwirken von Preßschnecke und besonders des vorderen Teiles derselben, des Preßteiles und den Zügen des Mundstückes an. Dabei ist man bisher davon ausgegangen, daß sich der Förderquerschnitt entsprechend dem sich verringernden Volumen des Preßgutes anpassen müsse und sowohl die Tiefe der Schneckenwindungen als auch der Züge sich verringern müssen und daß die Anwendung eines Dralls bei den Zügen besonders vorteilhaft sei, wie dies aus der DE-OS- 29 38 048 hervorgeht.

Aus der DE-A-27 17 337 ist ein Schneckenförderer bekannt geworden, bei dem eine über ihre Länge schwach konisch ausgebildete Förderschnecke in einem oben offenen Gehäuse fliegend gelagert ist und deren Endstück in einem an das Gehäuse anschließenden "Halsteil" mit konischer Bohrung, in die Felder und Züge eingearbeitet sind, läuft und das Fördergut in eine Rohrleitung übergibt.

Aufgabe der Erfindung ist es, die bei den beschriebenen Schneckenpressen mit einer Preß- oder Förderschnecke auftretenden Nachteile zu beseitigen oder wenigstens wesentlich zu verringern, wobei die starke Abhängigkeit des Preßverhaltens von der Beschaffenheit des Preßgutes und des Maßes des Wasserzusatzes wesentlich vermindert oder beseitigt wird und das Festbacken des Preßgutes und die damit verbundenen Anfahrschwierigkeiten nach Betriebsstillständen beseitigt werden, sowie die Empfindlichkeit gegen Fremdkörper wesentlich gesenkt wird.

Diese Aufgabe wird bei einer Maschine der eingangs genannten Art mit den Merkmalen des Anspruches 1 gelöst.

Die Gestaltung der Felder und Züge, axial ausgerichtet mit gerundeten Flächen bei flachen Eintiefungen, die sich in Förderrichtung vergrößern, sowie von Abstreifkanten mit stumpfen Kantenwinkein und durch die Abstimmung der Verjüngung und der anschließenden Aufweitung des Mundstückes ist es möglich eine einfach aufgebaute, verschleißfeste und zuverlässige Preßanordnung für Fasergut zu schaffen, welche für Qualitätsunterschiede im Preßmaterial wenig empfindlich ist.

Die Unteransprüche, auf die als Teil der Beschreibung besonders hingewiesen wird, betreffen besonders vorteilhafte Ausgestaltungen der Erfindung.

Dabei ist die Anwendung eines Winkels zwischen der Förderfläche der Schneckenwindung des Preßteiles und der Achse der Preßschnecke von 92° bis 103° und höchstens bis 110° und die Anwendung eines Übergangsradius zwischen der Förderfläche und dem Schneckenkern von weniger als der Hälfte bis zu einem Drittel und darunter besonders günstig, begrenzt durch den aus Festigkeitsüberlegungen gerade noch zulässigen Radius, weil dadurch die in Radialrichtung wirkenden Kräfte gering gehalten werden; dies ist umso mehr zu beachten, je geringer die innere Festigkeit des Preßgutes gegen Abscherkräfte ist, d.h. je leichter das Material zerreißbar ist.

Zur Sicherstellung eines ausreichenden Raumes für die Förderung des Preßgutes ist die Steigung der Preßschnecke genügend groß zu wählen.

Besonders vorteilhaft ist die Anbringung der Felder und Züge des Mundstückes in einem Preßeinsatz, der bei Verschleiß sehr einfach zu wechseln ist. Das Material des selben wird dabei weicher gewählt als das des Preßteiles der Preßschnecke, jedoch mit möglichst hoher Zähigkeit, um
Beschädigungen des Preßteiles zu verringern, bzw. einen sehr geringen Ringspalt von 0,5 bis 1 mm einhalten zu können, der für kraftschlüssige Pressung und den Transport des Preßgutes günstig ist.

Die konische Verjüngung des vorderen Bereiches des Mundstückes und des Preßteiles der Preßschnecke ist angepaßt an die fortschreitende Verdichtung des Preßgutes mit zwischen 5 und 10° zwischen der Achse der Preßschnecke und der Wand des Mundstückes, gewählt, wobei die Verdichtung über eine größere axiale Strecke erfolgen soll, in der mehrere Schneckenwindungen Platz finden. Dabei stellen zwei bis drei Windungen ein günstiges Minimum dar, das einen genügenden Kraftschluß zwischen Preßteil und den Zügen des Mundstückes gestattet, der bei Preßmaterial mit geringer innerer Festigkeit gegen Abscherkräfte über eine größere Fläche und damit größere axiale Länge verteilt werden muß.

Für die Herstellung guter Fördereigenschaft und um nach Stillständen die notwendigen Preßkräfte für das Ausschieben des Preßgutes geringer zu halten, ist eine leichte Erweiterung des Austrittsbereiches , der an den vorderen Bereich des Mundstückes anschließt, von Vorteil, wobei ein Öffnungswinkel zwischen Achse der Preßschnecke und der Wand des Mundstückes von 0,5 bis 2° sich als günstig erweist.

Bei der Gestaltung der Innenwand des Mundstückes oder des Preßeinsatzes ist besonders zu beachten, daß die Züge und Felder axial ausgerichtet sein müssen, weil eine Drehbewegung der Preßlinge an der Austrittsöffnung des Mundstückes vermieden werden muß, wenn eine Zangenpresse nachgeschaltet ist, deren Anwendung für den Aufbau und die Steuerung des Preßdruckes in einem, für das Material des Preßgutes geeigneten Druckbereich günstig ist, weil dadurch gleichzeitig der Anwendungsbereich der Presse für unterschiedlich beschaffenes Gutmaterial erweitert wird.

Des weiteren ist es schon zur Verringerung des Verschleißes günstig, den Feldern eine Breite in Umfangsrichtung zu geben, die wenigstens der Breite der Züge entspricht und die Zahl der Züge in einem vorteilhaften Bereich zu wählen; dabei haben sich fünf bis sieben Züge bewährt, sodaß sechs Züge eine besonders günstige Anordnung ergeben, bei denen Führung und Preßkräfte auf die Eigenschaften des durchschnittlichen Preßgutes abgestimmt sind.

Für die störungsfreie Förderung, d.h. zur Vermeidung des Durchreißens des Preßgutes ist es vorteilhaft, die Züge flach zu machen, wobei die drei-bis fünffache Breite diesbezüglich besonders günstige Eigenschaften ergibt.

Günstig ist dabei der gerundete Verlauf der schleifend beginnenden, sich in Drehrichtung des Preßteiles vertiefenden Züge an die ein Abschnitt stärkerer Krümmung bis zu dem nachgeordneten Feld verläuft und mit einer Abstreifkante endet, deren Kantenwinkel zwischen 110 und 130° liegt, um den raschen Verschleiß und damit Änderungen der Preßeigenschaften zu vermeiden.

Das Abstreifen des Preßgutes aus den Schneckenwindungen des Preßteiles der Preßschnecke wird dadurch begünstigt, daß die radiale Höhe von dessen Förderfläche zur gerundeten Spitze desselben sich auf Null verringert, wobei dieser Bereich an das Ende des vorderen Bereiches des Mundstückes gelegt ist, an dem vorteilhafterweise ein zylindrischer oder schwach erweiterter Bereich den Übergang zu dem aufweitenden Austrittsbereich des Mundstückes bildet, in den die Züge flach auslaufen.

Die Erfindung wird an Hand einer erfindungsgemäßen Ausführungsform beschrieben.

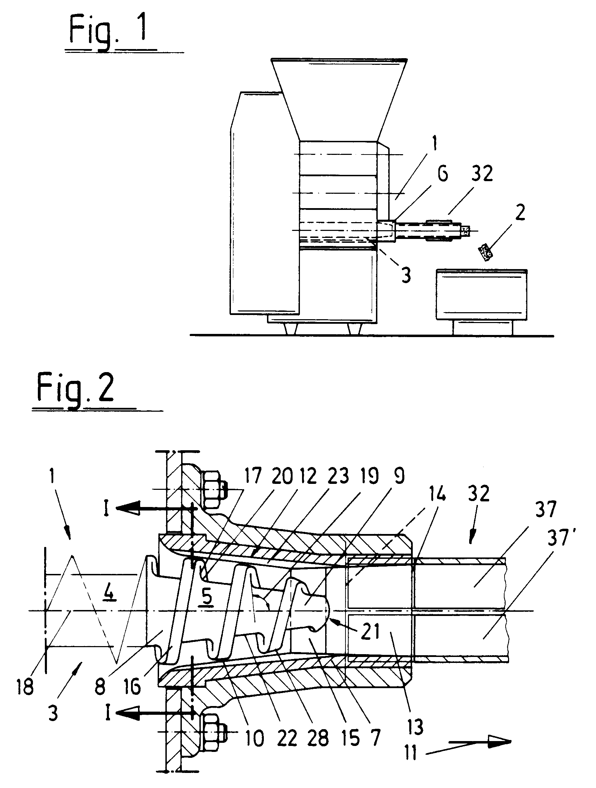

Dabei zeigt
- Fig. 1: eine Seitenansicht einer Verarbeitungsmaschine für faseriges Abfallgut mit einer Schneckenpresse, schematisch,
- Fig. 2: einen Teilausschnitt aus der Schneckenpresse, mit deren Endstück und dem Mundstück, sowie den Backen einer Preßzange in Draufsicht geschnitten, schematisch,

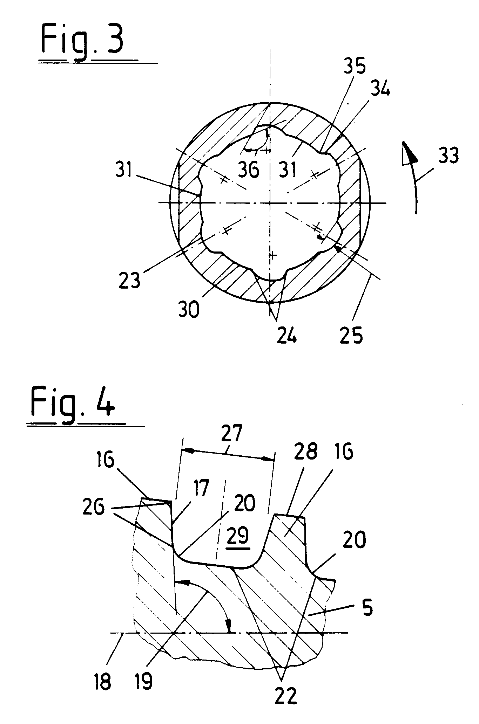

- Fig. 3: einen Querschnitt durch den Preßeinsatz des Mundstückes nach I-I in Fig.1 und
- Fig. 4: einen Teilausschnitt aus dem konischen Preßteil der Schneckenpresse zwischen zwei Gängen der Schneckenwindung.

In einer Verarbeitungsmaschine für faseriges Preßgut, insbesondere Abfallpapier und Kartonagen und dgl., ist eine Schneckenpresse 1 eingebaut, an deren Mundstück 6 eine Preßzange 32 anschließt, die das Preßgut weiter verdichtet und mit deren Schließkraft der Gegendruck für das Preßgut gesteuert wird.

Die Schneckenpresse 1 weist eine Preßschnecke 3 auf, die aus einem zylindrischen Förderteil 4 und einem konischen Preßteil 5 besteht, ausgestattet mit einer eingängigen Schneckenwindung 16 unterschiedlicher Steigung 27.

Der zylindrische Förderteil 4 läuft in einem nach oben offenen Pressentrog und ist an diesem Ende fliegend gelagert und wird von dieser Seite her angetrieben - nicht dargestellt.

Der an den Förderteil 4 anschließende konische Preßteil 5 läuft in einem Preßeinsatz 7 eines konischen Mundstückes 6, in den, in einem in Förderrichtung 11 gesehen vorderen Bereich 12, axial verlaufend, Züge 23 und Felder 30 eingearbeitet sind, wobei in Förderrichtung 11 gesehen ein vorderer Bereich 8 des Preßteiles 5 mit einem Umfangsspalt 10 von 0,5 bis 1 mm zwischen der Stirnfläche 28 der Schneckenwindung 16 und der Innenwand 31 des Preßeinsatzes 7 des Mundstückes 6 umläuft.

An den vorderen Bereich 8 des Preßteiles 5 schließt ein hinterer Bereich 9 an,der wesentlich stärker konisch geformt ist und über dem die radiale Höhe 26 der durch die Schneckenwindung 16 gebildeten Förderfläche 17 in Förderrichtung 11 abnimmt und verschwindet wo dieser Bereich mit einem kugelig gerundeten Ende 21 endet.

Die Förderfläche 17 schließt mit der Achse 18 der Preßschnecke 3 einen Winkel 19 von 92 Winkelgraden in Förderrichtung 11 ein, die gerade ausreichen, einen Kraftschluß mit den Zügen 23 des Preßeinsatzes 7 über das Preßgut herzustellen und aufrecht zu erhalten.

Ebenso ist der Übergangsradius 20 zwischen der Förderfläche 17 und dem konischen Schneckenkern 22 möglichst gering gehalten und beträgt weniger als die Hälfte der radialen Höhe 26 der Förderfläche 17, wodurch die radialen Komponenten der Preßkräfte an dieser Stelle gering gehalten werden.

Der Raum 29 zwischen den Gängen der Schneckenwindung 16, der im wesentlichen durch die Steigung 27 und den Durchmesser des Schneckenkernes 22 bestimmt wird, nimmt in Förderrichtung 11 mit Zunahme der Verdichtung des Preßgutes ab.

Die Züge 23 des Preßeinsatzes 7 sind in dessen, in Förderrichtung 11 gesehen, vorderem Bereich 12 des Mundstückes 6 angebracht und weisen eine Breite 24 in Drehrichtung 33 des Preßteiles 5 auf, die geringer ist als die Breite eines benachbarten Feldes 30.Sie vertiefen sich von einem flachen Beginn bis zu einer Tiefe 25, die geringer ist als die Breite 24 eines Zuges 23 und kehren mit einer steilen Krümmung 34 zur Innenwand 31, welche das Feld 30 bildet, unter Bildung einer Abstreifkante 35 zurück.

Diese Abstreifkante 35 weist einen Kantenwinkel 36 auf, der etwa 120 Winkelgrade beträgt und wodurch einerseits der Verschleiß vermindert und andererseits das Abreißen des Preßgutes vermieden wird.

An den vorderen Bereich 12 des Mundstückes 6 bzw. des Preßeinsatzes 7, dessen Verjüngungswinkel mit der Achse 18 der Preßschnecke 3 zwischen 5 und 10 Winkelgrade und vorzugsweise 7 Winkelgrade beträgt, schließt ein Austrittsbereich 13 an, der sich geringfügig mit etwa 0,5 bis 2 Winkelgrade, vorzugsweise 1 Winkelgrad aufweitet, um ein Verstopfen oder Festbacken beim Wiederanlauf nach einem Stillstand zu vermeiden.

Zwischen dem vorderen Bereich 12 und dem Austrittsbereich 13 ist ein zylindrischer oder schwach erweiterter Übergangsbereich 15 vorgesehen, in dem die Züge 23 abzuflachen beginnen und an dem der hintere Bereich 9 des Preßteiles 5 beginnt.

An dieser Stelle beginnt sich das Preßgut von der Preßschnecke 3 zu lösen und wird durch den Austrittsbereich 13 und durch die Austrittsöffnung 14 gepreßt, wo Backen 37,37' einer Preßzange 32 das Preßgut aufnehmen und gesteuert zurückhalten, um den erforderlichen Gegendruck für eine einwandfreie Verdichtung zu erzeugen. Am Ende der Preßzange 32 wird das Preßgut in Form von unregelmäßig gebrochenen Preßlingen 2 abgegeben.

### Legende :

- 1: Schneckenpresse
- 2: Preßlinge
- 3: Preßschnecke
- 4: zylindrischer Förderteil der Preßschnecke 3
- 5: konischer Preßteil der Preßschnecke 3
- 6: konisches Mundstück der Schneckenpresse 1, sich in Förderrichtung 11 verengend
- 7: Preßeinsatz des Mundstückes 6
- 8: vorderer Bereich des Preßteiles 5
- 9: hinterer Bereich des Preßteiles 5
- 10: Umfangsspalt zwischen dem vorderen Bereich 8 des Preßteiles 5 und dem Mundstück 6
- 11: Förderrichtung des Preßgutes
- 12: vorderer Bereich des Mundstückes 6
- 13: Austrittsbereich des Mundstückes 6
- 14: Austrittsöffnung des Mundstückes 6 für das Preßgut
- 15: zylindrischer oder schwach erweiterter Übergangsbereich des Mundstückes 6 zwischen dem vorderen Bereich 12 und dem Austrittsbereich 13
- 16: Schneckenwindung
- 17: Förderfläche für die Verdichtung des Preßgutes
- 18: Achse der Preßschnecke 3
- 19: Winkel zwischen Förderfläche 17 und Achse 18 der Preßschnecke 3
- 20: Übergangsradius zwischen Förderfläche 17 und konischem Kern 22 des Preßteiles 5
- 21: kugelig abgerundetes Ende des hinteren Bereiches 9 des Preßteiles 5
- 22: konischer Schneckenkern des Preßteiles 5
- 23: Züge des Mundstückes 6 bzw. des Preßeinsatzes 7
- 24: Breite eines Zuges 23
- 25: Tiefe des Zuges 23
- 26: radiale Höhe der Förderfläche 17
- 27: Steigung der Schneckenwindung 16
- 28: Stirnfläche der Schneckenwindung 16
- 29: Raum für das Preßgut
- 30: Felder des Mundstückes 6 oder des Preßeinsatzes 7
- 31: Innenwand des Mundstückes 6 oder des Preßeinsatzes 7
- 32: Preßzange
- 33: Drehrichtung des Preßteiles 5
- 34: steile Krümmung des Zuges 23
- 35: Abstreifkante zwischen Zug 23 und Feld 30
- 36: Kantenwinkel der Abstreifkante 35
- 37,37': Backen der Preßzange 37

## Patentansprüche

1. Schneckenpresse für das Pressen von Fasergut, insbesondere Altpapier, mit einer Preßschnecke (3), die von einem Antriebsmotor über ein Getriebe angetrieben, fliegend gelagert ist und aus einem in einem offenen Schneckentrog laufenden Förderteil (4) und aus einem sich konisch verjüngenden Preßteil (5) mit wenigstens einer eingängigen Schneckenwindung (16), deren Förderfläche (17), für die Verdichtung des Preßgutes, mit der Achse (18) der Preßschnecke (3) einen Winkel (19) von wenigstens 90 Winkelgraden einnimmt, besteht, der in einem sich in Förderrichtung (11), auf seine Austrittsöffnung (14) zu, konisch verengenden Mundstück (6) läuft und einen in Förder richtung (11) des Preßgutes gesehen, vorderen Bereich (8) auf weist, über den die Stirnfläche (28) der Schneckenwindung (16) mit dem, in Förderrichtung (11) gesehen, vorderen Bereich (12) des Mundstückes (6) mit geringerer Umfangsspaltbreite (10) zwischen diesen zusammenarbeitet und in das, wenigstens über einen Teil seiner Verengung, Felder (30) und in Bezug auf ihre Breite (24) eine geringe Tiefe (25) aufweisende Züge (23) eingearbeitet hat, dadurch gekennzeichnet, daß die Züge ((23) sich in Förderrichtung (11) vertiefen, wobei auf den vorderen Bereich (12) des Mundstückes (6) in Förderrichtung (11) ein sich konisch schwach erweiternder Austrittsbereich (13) folgt, der sich in Förderrichtung (11) mit verflachend auslaufenden Zügen (23) konisch erweitert und an dem oder in dessen Beginn der, in Förderrichtung (11) gesehen, hintere Bereich (9) des Preßteiles (5) der Preßschnecke (3), mit einer konischen Ver jüngung, die einem Mehrfachen der Verjüngung des vorderen Bereiches (8) des Preßteiles (5) entspricht, endet und der das Preßgut in den Austrittsbereich (13) des Mundstückes (6) abgibt.

2. Schneckenpresse nach dem vorhergehenden Anspruch, dadurch gekennzeichnet, daß an dem Preßteil (5) der Preßschnecke (3) Raum (29) für das Preßgut zwischen dem ebenfalls konischen Schneckenkern (22) und den Gängen der Schneckenwindung (16) vorgesehen ist, der an dem Preßteil (5),in Förderrichtung (11) gesehen, im Ausmaß der fortschreitenden Verdichtung des Preßgutes sich verringernd vorgesehen ist, wobei zumindest die Förderfläche (17) der Schneckenwindung (16) für die Verdichtung des Preßgutes mit der Achse (18) der Preßschnecke (3) einen Winkel (19) von mehr als 90 Winkelgraden einschließt und mit einem Übergangsradius (20) auf die Oberfläche des konischen Schneckenkernes (22) übergeht, der einem Bruchteil der radialen Höhe (26) der Förderfläche (17) entspricht.

3. Schneckenpresse nach Anspruch 1 oder 2, dadurch gekennzeichnet, daß der Winkel (19) zwischen der Förderfläche (17) der Schneckenwindung (16) und der Achse (18) des Preßteiles (5) umso größer eingerichtet wird, je größer die innere Festigkeit des Preßmaterials gegen Scherkräfte während des Verdichtungsvorganges ist.

4. Schneckenpresse nach einem der vorhergehenden Ansprüche, dadurch gekennzeichnet, daß die Steigung (27) der Schneckenwindung (16) wenigstens der radialen Höhe (26) von dessen Förderfläche (17) entspricht.

5. Schneckenpresse nach einem der vorhergehenden Ansprüche, dadurch gekennzeichnet, daß der Übergangsradius (20) zwischen der Förderfläche (17) der Schneckenwindung (16) des konischen Preßteiles (5) und der Oberfläche des konischen Schneckenkernes (22) umso größer eingerichtet wird, je größer die innere Festigkeit des Preßmaterials gegen Scherkräfte während des Verdichtungsvorganges ist.

6. Schneckenpresse nach einem der vorhergehenden Ansprüche, dadurch gekennzeichnet, daß die radiale Höhe (26) der Förderfläche (17) der Schneckenwindung (16) an einer Stelle des konischen Preßteiles (5) nicht um ein Mehrfaches geringer ist, als der Radius des Schneckenkernes (22) an dieser Stelle.

7. Schneckenpresse nach einem der vorhergehenden Ansprüche, dadurch gekennzeichnet, daß die radiale Höhe (26) der Förderfläche (17) der Schneckenwindung (16) des konischen Preßteiles (5) im hinteren Bereich (9) des Preßteiles (5) bis zu dessen kugelig abgerundeten Ende (21), vorzugsweise verlaufend, verschwindet.

8. Schneckenpresse nach einem der vorhergehenden Ansprüche, dadurch gekennzeichnet, daß das konische Mundstück (6) der Schneckenpresse (1) mit einem Preßeinsatz (7) versehen ist, der im vorderen Bereich (12) die Züge (23) und die Felder (30) trägt und sich konisch in Förderrichtung (11) verjüngt und einen Austrittsbereich (13) aufweist, der sich zur Austrittsöffnung (14) hin schwach erweitert.

9. Schneckenpresse nach einem der vorhergehenden Ansprüche, dadurch gekennzeichnet, daß daß das konische Mundstück (6) oder der Preßeinsatz (7) zwischen dem vorderen Bereich (12) und dem Austrittsbereich (13) einen kurzen zylindrischen oder schwach erweiterten Übergangsbereich (15) aufweist.

10. Schneckenpresse nach einem der vorhergehenden Ansprüche, dadurch gekennzeichnet, daß das Mundstück (6) oder der Preßeinsatz (7) mit axial ausgerichteten Zügen (23) und Feldern (30) versehen sind, wobei die Felder (30) wenigstens den gleichen Umfang der Innenwand (31) des Mundstückes (6) oder des Preßeinsatzes (7) einnehmen wie die Züge (23).

11. Schneckenpresse nach einem der vorhergehenden Ansprüche, dadurch gekennzeichnet, daß sich im vorderen Bereich (12) des Mundstückes (6) oder des Preßeinsatzes (7)mehrere Windungen der Schneckenwindung (16) des konischen Preßteiles (5) befinden und dieser mit umso größerer axialer Länge eingerichtet ist, je kleiner die innere Festigkeit des Preßmaterials gegen Scherkräfte während des Verdichtungsvorganges ist.

12. Schneckenpresse nach einem der vorhergehenden Ansprüche, dadurch gekennzeichnet, daß die Züge (23) des Mundstückes (6) oder des Preßeinsatzes (7) eine Breite (24) aufweisen, die einem Mehrfachen ihrer Tiefe (25) entspricht.

13. Schneckenpresse nach einem der vorhergehenden Ansprüche, dadurch gekennzeichnet, daß jeder Zug (23) des Mundstückes (6) oder des Preßeinsatzes (7) einen gerundeten Verlauf aufweist, sich in Drehrichtung (33) des Preßteiles (5) flach verlaufend vertieft und mit einer steileren Krümmung (34) oder Fläche endet, die mit dem anschließenden Feld (30) eine Abstreifkante (35) bildet.

14. Schneckenpresse nach dem vorhergehenden Anspruch, dadurch gekennzeichnet, daß die Abstreifkante (35) von einem stumpfen Kantenwinkel (36) zwischen Zug (23) und Feld (30) gebildet ist.

15. Schneckenpresse nach einem der vorhergehenden Ansprüche, dadurch gekennzeichnet, daß der Zug (23) an dem vorausgehenden Feld (30) flach verlaufend beginnt.

16. Schneckenpresse nach einem der vorhergehenden Ansprüche, dadurch gekennzeichnet, daß wenigstens fünf Züge (23), vorzugsweise sechs, gleichmäßig verteilt über den Umfang der Innenwand (31) des Mundstückes (6) oder des Preßeinsatzes (7) verteilt angeordnet sind.

17. Schneckenpresse nach einem der vorhergehenden Ansprüche, dadurch gekennzeichnet, daß das Abstreifen des Preßgutes von dem hinteren Bereich (9) des Preßteiles (5) im wesentlichen an der engsten Stelle des Mundstückes (6) oder des Preßeinsatzes (7), im Bereich des Überganges zwischen dem vorderen Bereich (12) und dem Austrittsbereich (13) desselben erfolgt.

18. Schneckenpresse nach einem der vorhergehenden Ansprüche, dadurch gekennzeichnet, daß das Preßgut beim Austritt durch die Austrittsöffnung (14) des Mundstückes (6) oder des Preßeinsatzes (7) von einer Preßzange (32) erfaßt wird, die eine zusätzliche Preßkraft auf das Preßgut in der Schneckenpresse (1) in Abhängigkeit von durchgesetzter Gutmenge und eingestelltem Preßdruck an der Preßzange (32), gesteuert ausübt.

## Claims

1. A screw extruder for the pressing of fibres, esp. waste paper, comprising an extrusion screw (3), driven by a driving engine through a gear unit, in an overhung position and consisting of a conveyor part (4) in an open vat and of a coned press part (5) with at least one coiling (16) whose conveyor area (17),for the compression of the fibres, has an angel (19) of at least 90° with the axis (18) of the extrusion screw (3) which is pointing into the mouth piece (6) coned towards the opening-outlet (14), into the conveyor's direction (11), and features a front part (8), seen into the conveyor's direction (11) of the pressed fibres, through which the front area (28) of the coiling (16), seen into the conveyor's direction (11), works together with the front part (12) of the mouth piece (6) with little circumference (10) between these and into which it has made, at least in one part of ist narrowing, panels (30) and concerning their width (24) it has made the tractions (23) less deep (25), featured by the tractions (23) deepening into the conveyor's direction (11) in which the front part (12) of the mouth piece (6) into the conveyor's direction (11) is followed by a slightly coned opening-outlet (13) which cones into the conveyor's direction (11) with flattened, ended tractions (23) and in which or in whose beginning, seen into the conveyor's direction (11), the rear part (9) of the press part (5) of the extrusion screw (3),with a coned narrowing, which corresponds to a multiple of the narrowing of the front part (8) of the press part (5), ends and which dispatches the pressed fibres into the opening-outlet (13) of the mouth piece (6).

2. A screw extruder according to the preceding claim, characterised by the fact that there is space (29), set for the pressed fibres at the press part (5) of the extrusion screw (3),also between the coned screw centre (22) and the course of the screw coiling (16), which is set at the press part (5), seen into the conveyor's direction (11) decreasingly corresponding to the increasing extent of the compression of the pressed fibres, in which at least conveyor area (17) of the screw coiling (16) for the compression of the pressed fibres includes an angel (19) of more than 90° with the axis (18) of the extrusion screw (3) and goes over with a transistional radius (20) to the surface of the coned screw centre (22) which is equivalent to a traction of the radial height (26) of the conveyor area (17).

3. A screw extruder according to claim 1 or 2, characterised by the fact that the angle (19) between the conveyor area (17) of the screw coiling (16) and the axis (18 of the press part (5) is made the bigger, the bigger the interior compactness of the pressed material is against the forces during the process of the compression.

4. A screw extruder according to one of the preceding claims, characterised by the fact that the gradient (27) of the screw coiling (16) corresponds to at least the radial height (26) of ist conveyor area (17).

5. A screw extruder according to one of the preceding claims, characterised by the fact that the transistional radius (20) between the conveyor area (17) of the screw coiling (16) of the coned press part (5) and the surface of the coned screw centre (22) is set the bigger, the bigger the interior compactness of the pressed material is against the forces during the process of the compression.

6. A screw extruder according to one of the preceding claims characterised by the fact that the radial height (26) of the conveyor area (17) of the screw coiling (16) at one point of the coned press part (5) is not less than a multiple of the radins of the screw centre (22) at this point.

7. A screw extruder according to one of the preceding claims characterised by the fact that the radial height (26) of the conveyor area (17) of the screw coiling (16) of the coned press part (5) in the rear part (9) of the press part (5) disappears up to ist spherically rounded end (21), preferably gradually.

8. A screw extruder according to one of the preceding claims, characterised by the fact that the coned mouth piece (6) of the screw extruder (1) is designed with a press application (7) which carries the tractions (23) and the panels (30) in the front part (12) and cones into the conveyor's direction (11) and shows an opening-part (13) which widens slightly towards the opening-outlet (14).

9. A screw extruder according to one of the preceding claims, characterised by the fact that the coned mouth piece (6) or the press application (7) between the front part (12) and the opening-part (13) shows a short cylindrical or slightly widened transistional part (15).

10. A screw extruder according to one of the above claims, characterised by the fact that the month piece (6) or the press application (7) are designed with tractions (23) made axially and panels (30) where the panel have at least the same circumference of the inner wall (31) of the mouth piece (6) or the press application as the tractions (23).

11. A screw extruder according to one of the proceding claims, characterised by the fact that there are several angels of the coiling (16) of the coned press part (5) in the front part (12) of the mouth piece or the press application (7) and this is made with the greater axial length, the smaller the interior compactness off the pressed material is against forces during the process of the compression.

12. A screw extruder according to one of the preceding claims, characterised by the fact that the tractions (23) of the mouth piece (6) or the press application (7) have a width (24) which corresponds to a multiple of ist depth (25).

13. A screw extruder according to one of the preceding claims, characterised by the fact that every traction (23) of the mouth piece (6) or the press application (7) shows a rounded course, deepens slightly into the rotating direction (33) of the press part (5) and ends with a steeper winding (34) or area which forms a wiping edge (35) with the following panel (30).

14. A screw extruder according to the preceding claim, characterised by the fact that the wiping edge (35) is formed by an obtuse angel at the edge (36) between traction (23) and panel.

15. A screw extruder according to one of the preceding claims, characterised by the fact that the traction (23) at the preceding panel (30) begins an a flattened way.

16. A screw extruder according to one of the preceding claims, characterised by the fact that at least 5 tractions (23), preferably 6, are set evenly at the circumference of the inner wall (31) of the mouth piece (6) or of the press application (7).

17. A screw extruder according to one of the preceding claims, characterised by the fact that the wiping of the pressed fibres of the rear part (9) of the press part (5) mainly happens at the narrowest point of the mouth piece (6) or the press application (7), at the passage region between the front part (12) and the opening-outlet (13) of the latter.

18. A screw extruder according to one of the preceding claims, characterised by the fact that the pressed fibres is cought by press jaws (32) during the transport through the opening outlet (14) of the mouth-piece (6) or the press application (7), which exerts an additional press force onto the pressed fibres in the screw extruder (1) in dependence on the pressed amount pushed through and on the adjusted press pressure controlled at the press jaws (32).

## Revendications

1. Extrudeuse pour la compression de matières fibreuses, en particulier vieux papier, munie d'une vis sans fin (3), montée flottante, entrainée par un moteur d'entrainement à engrenage, et se composant d'un dispositif de transport roulant dans un entonnoir ouvert (4) et d'une partie pressante (5) se retrécissant de manière conique avec au moins une hélice sans fin (16) à accès unique, dont le plan de transport (17) pour la compression du matériel à presser forme un angle (19) d'au moins 90 degrés avec l'axe (18) de la vis sans fin (3), qui, en direction du convoyeur (11), et ce vers son orifice de sortie (14), se transforme en une machoire conique étroite (6), présentant une partie avant (8), vu en direction du convoyeur (11) du matériel à compresser, au-delà de laquelle la partie frontale (28) de l'hélice sans fin (16) et vu en direction du plan de transport (11), travaillant avec la partie avant (12) de la machoire (6) avec une ouverture moindre (10) au moins sur une partie de son rétrécissement entrainant des champs électriques (30) et par rapport à leur largeur (24) une profondeur minime (25) des dispositifs de traction (23), caractérisé de par le fait que les dispositifs de traction (23) s'enfoncant en direction du convoyeur (11), d'ou suit, sur le plan avant (12) de la machoire (6) en direction du convoyeur (11) une zone de sortie (13), avec des dispositifs de traction (23), s'évasant faiblement en forme de cone et au debut duquel vu en direction du convoyeur (11), la partie arrière (9) de la partie pressante (5) de la vis sans fin (3) avec un rétrécissement conique, correspondant à un répétition du rétrécissement de la partie avant (8) de la partie pressante (5) se termine et rejète le materiel à presser dans une zone de sortie (13) de la machoire (6).

2. Extrudeuse, selon la revendication précédente, caractérisée de par le fait qu'à la partie pressante (5) de la vis sans fin (3), il est prévu de la place (29) pour la matière à presser entre le noyau conique (22) et les voies de l'hélice sans fin (16), qu'à la partie pressante (5), vu en direction du plan de transport (11), est prévu par rapport à l'ampleur de la compression du matériel à presser, le plan de transport (17) de l'hélice sans fin (16) pour la compression du matériel à presser formant avec l'axe (18) de la vis sans fin (3) un angle (19) de plus de 90 degrés avec un radius de transition (20) sur la surface du noyau conique (22), correspondant à une partie de la hauteur radiale (26) du plan de transport (17).

3. Extrudeuse, selon les revendications 1 ou 2, caractérisée de par le fait que l'angle (19) entre le plan de transport (17) de l'hélice sans fin (16) et l'axe (18) de la partie pressante (5) devra être plus grand suivant la compacité interne du matériel à presser par rapport à la force de coupe pendant le processus de compression.

4. Extrudeuse, selon l'une des revendications précédentes, caractérisée de par le fait que le pas (27) de l'hélice sans fin (16) correspond au moins à la hauteur radiale (26) de celle du plan de transport (17).

5. Extrudeuse, selon l'une des revendications précédentes, caractérisée de par le fait que le radius de transition (20) entre le plan de transport (17) de l'hélice sans fin (16) de la partie conique de la partie pressante (5) et la surface du noyau conique (22) devra être plus grand suivant la compacité interne du matériel à presser par rapport à la force de coupe pendant le processus de compression.

6. Extrudeuse, selon l'une des revendications précédentes, caractérisée de par le fait que la hauteur radiale (26) du plan de transport (17) de l'hélice sans fin (16) n'est pas moindre que le radius du noyau (22) à cet endroit conique de la partie pressante (5).

7. Extrudeuse, selon l'une des revendications précédentes, caractérisée de par le fait que la hauteur radiale (26) du plan de transport (17) de l'hélice sans fin (16) de la partie conique de la presse (5) disparait dans le domaine arrière (9) de la partie pressante (5) jusqu'à sa fin en forme sphérique (21).

8. Extrudeuse, selon les revendications précédentes, caractérisée de par le fait que la mâchoire conique (6) de l'extrudeuse (1) pourvue d'un châssis de presse (7) avec sur le plan avant (12) les dispositifs de traction (23) et les champs électriques (30), se rétrécissant de manière conique en direction du convoyeur (11) présentant une zone de sortie (13) et s'élargissant légèrement vers un orifice de sortie (14).

9. Extrudeuse, selon l'une des revendications précédentes, caractérisée de par le fait que la mâchoire conique (6) ou le châssis de la presse (7) présente entre la partie avant (12) et l'orifice de sortie (13) une zone (15) un peu cylindrique ou faiblement évasée.

10. Extrudeuse, selon l'une des revendications précédentes, caractérisée de par le fait que la mâchoire (6) ou le châssis de la presse (7) sont pourvus de dispositifs de traction axiaux (23) et de champs électriques (30), les champs électriques (30) prenant au moins la même surface de la paroi interne (31) de la mâchoire (6) ou du châssis de la presse (7) de même que les dispositifs de traction (23).

11. Extrudeuse, selon l'une des revendications précédentes, caractérisée de par le fait que sur le plan avant (12) de la mâchoire (6) ou du châssis de la presse (7) se trouvent plusieurs entortillements de l'hélice sans fin (16) de la partie conique de la presse (5) et cela d'une longueur axiale plus grande si la consistance du matériel à presser est moindre que la force de coupe lors de la procédure de compression.

12. Extrudeuse, selon l'une des revendications précédentes, caractérisée de par le fait que les dispositifs de traction (23) de la mâchoire (6) ou du châssis de la presse (7) ont une largeur (24) correspondant à plusieurs fois celle de leur profondeur (25).

13. Extrudeuse, selon l'une des revendications précédentes, caractérisée de par le fait que chaque champ électrique (23) de la mâchoire (6) ou du châssis de la presse (7) présente un tracé arrondi, s'approfondissant en un mouvement circulaire surperficiel (33) du plan de presse (5) et se terminant par une courbe abrupte (34) ou superficie, formant une arête de balayage (35) avec le champ électrique suivant (30).

14. Extrudeuse, selon l'une des revendications précédentes, caractérisée de par le fait que l'arête de balayage (35) est formée d'un angle obtus (36) entre dispositif de traction (23) et champ électrique (30).

15. Extrudeuse, selon l'une des revendications précédentes, caractérisée de par le fait qu'au moins cinq dispositifs de traction (23) commencent à se developper d'une facon plane au niveau du champ électrique (30).

16. Extrudeuse, selon l'une des revendications précédentes, caractérisée de par le fait qu'au moins cinq dispositifs de traction (23) au mieux six, sont répartis régulièrement sur la paroi (31) de la mâchoire (6) ou du châssis de la presse (7).

17. Extrudeuse, selon l'une des revendications précédentes, caractérisée de par le fait que le balayage du matériel à presser se fait dans la zone arrière (9) de la partie de la presse (5), en grande partie à l'endroit le plus étroit de la mâchoire (6) ou du châssis de la presse (7), la même chose se produisant dans la zone de transition entre la partie avant (12) et l'orifice de sortie (13).

18. Extrudeuse, selon l'une des revendications précédentes, caractérisée de par le fait que le matériel à presser est saisi à la sortie de l'orifice (14) de la mâchoire (6) ou du châssis de la presse (7) par une pince (32), exerçant une force supplémentaire sur le matériel dans l'extrudeuse (1), ceci dépendant de la quantité de produit et de la force de pression de la pince (32).
